# EUROPEAN PATENT APPLICATION

(11) **EP 4 756 645 A1**
(43) Date of publication of application: **10.06.2026**
(21) Application number: 25200892.5
(22) Date of filing: 08.09.2025
(51) Int. Cl.: G06F 16/738

(54) **SINGING VIDEO GENERATION METHOD AND APPARATUS, ELECTRONIC DEVICE, AND STORAGE MEDIUM**

(30) Priority: 04.12.2024 CN 202411775029
(71) Applicant: Beijing Zitiao Network Technology Co., Ltd., Beijing 100190 (CN)
(72) Inventor: Zhou, Yuecheng, Beijing, 100028 (CN); Zhong, Jinbao, Beijing, 100028 (CN)
(74) Representative: Marks & Clerk LLP

(57) **Abstract**

A singing video generation method and apparatus, an electronic device, and a storage medium are provided. After target music is generated by a target application, a publishing page corresponding to the target music is displayed in the target application, where a video generation control for generating a singing video matching the target music is configured in the publishing page; in response to a first trigger operation on the video generation control, a first video generation page is displayed in the target application, where the first video generation page is configured to display at least one video material; and in response to a second trigger operation on the first video generation page, a target video material is determined and the singing video is generated based on the target video material, where a mouth action of a target object in the singing video matches music content of the target music.

## Description

### TECHNICAL FIELD

Embodiments of the present disclosure relate to the field of Internet technologies and, in particular, to a singing video generation method and apparatus, an electronic device, and a storage medium.

### BACKGROUND

At present, artificial intelligence generated content (Artificial Intelligence Generated Content, AIGC) technology has been increasingly applied to various industries. For example, training a music generation model with music samples may enable the model to have the ability of "creating" music, thereby generating "original music" that meets user requirements, that is, intelligently generated music.

### SUMMARY

In a first aspect, an embodiment of the present disclosure provides a singing video generation method, including:
displaying, after generating target music with a target application, a publishing page corresponding to the target music in the target application, wherein a video generation control for generating a singing video matching the target music is configured in the publishing page; displaying, in response to a first trigger operation on the video generation control, a first video generation page in the target application, wherein the first video generation page is configured to display at least one video material; and determining a target video material and generating the singing video based on the target video material in response to a second trigger operation on the first video generation page, wherein the singing video and the target video material include a same target object, and a mouth action of the target object in the singing video matches music content of the target music.

In a second aspect, an embodiment of the present disclosure provides a singing video generation apparatus, including:
a first display module, configured to display a publishing page after target music is generated, wherein a video generation control for generating a singing video matching the target music is configured in the publishing page;
a second display module, configured to display, in response to a first trigger operation on the video generation control, a first video generation page in a target application, wherein the first video generation page is configured to display at least one video material; and
a generation module, configured to determine a target video material and generate the singing video based on the target video material in response to a second trigger operation on the first video generation page, wherein the singing video and the target video material include a same target object, and a mouth action of the target object in the singing video matches music content of the target music.

In a third aspect, an embodiment of the present disclosure provides an electronic device, including: a processor and a memory;
where the memory stores computer-executable instructions; and
the processor executes the computer-executable instructions stored in the memory to cause the processor to execute the singing video generation method according to the above first aspect and various possible designs of the first aspect.

In a fourth aspect, an embodiment of the present disclosure provides a computer-readable storage medium, where computer-executable instructions are stored in the computer-readable storage medium, and the computer-executable instructions, when executed by a processor, implement the singing video generation method according to the above first aspect and various possible designs of the first aspect.

In a fifth aspect, an embodiment of the present disclosure provides a computer program product, including a computer program, where the computer program, when executed by a processor, implements the singing video generation method according to the above first aspect and various possible designs of the first aspect.

### BRIEF DESCRIPTION OF THE DRAWINGS

In order to more clearly illustrate the technical solutions in the embodiments of the present disclosure or in the prior art, the following briefly introduces the drawings required for describing the embodiments or the prior art. Obviously, the drawings in the following description are some embodiments of the present disclosure, and for those of ordinary skill in the art, other drawings may also be obtained based on these drawings without paying any creative effort.
Fig. 1 is an application scenario diagram of a singing video generation method provided by an embodiment of the present disclosure;
Fig. 2 is a first flowchart of a singing video generation method provided by an embodiment of the present disclosure;
Fig. 3 is a flowchart of a specific implementation of step S102 in the embodiment shown in Fig. 2;
Fig. 4 is a schematic diagram of a first video generation page provided by an embodiment of the present disclosure;
Fig. 5 is a flowchart of a specific implementation of generating a singing video based on a target video material;
Fig. 6 is a second flowchart of a singing video generation method provided by an embodiment of the present disclosure;
Fig. 7 is a flowchart of a specific implementation of step S207 in the embodiment shown in Fig. 6;
Fig. 8 is a schematic diagram of a process of generating a singing video provided by an embodiment of the present disclosure;
Fig. 9 is a structural block diagram of a singing video generation apparatus provided by an embodiment of the present disclosure;
Fig. 10 is a structural schematic diagram of an electronic device provided by an embodiment of the present disclosure; and
Fig. 11 is a schematic diagram of a hardware structure of an electronic device provided by an embodiment of the present disclosure.

### DETAILED DESCRIPTION

In order to make the objectives, technical solutions, and advantages of the embodiments of the present disclosure clearer, the technical solutions in the embodiments of the present disclosure are described below clearly and comprehensively with reference to the drawings in the embodiments of the present disclosure. Obviously, the described embodiments are some but not all of the embodiments of the present disclosure. All other embodiments obtained by those of ordinary skill in the art based on the embodiments of the present disclosure without paying any creative effort shall fall within the protection scope of the present disclosure.

It should be noted that the user information (including but not limited to user device information, user personal information, etc.) and data (including but not limited to data for analysis, stored data, displayed data, etc.) involved in the present disclosure are all information and data authorized by the user or fully authorized by all parties, and the collection, use, and processing of the related data need to comply with the related laws, regulations, and standards of the related countries and regions, and a corresponding operation entry is provided for the user to select authorization or rejection.

After the intelligently generated music with melody and corresponding lyrics is generated by the intelligent generated content technology, the intelligently generated music may be propagated by means of platform publishing, sharing, etc. However, due to the absence of a matching singing video, the propagation effect of the intelligently generated music is poor. In the related technology, the intelligently generated music may be processed by means of additional third-party software to generate a corresponding video, which is then returned to the original generation platform of the intelligently generated music for publishing or sharing.

However, in the above process of generating a corresponding video for the intelligently generated music, there are problems of low interaction efficiency and low matching degree between the generated video and the intelligently generated music.

Embodiments of the present disclosure provide a singing video generation method and apparatus, an electronic device, and a storage medium to overcome the problems of low interaction efficiency and low matching degree between the generated video and the intelligently generated music in the process of generating a corresponding video for the intelligently generated music.

According to the singing video generation method and apparatus, the electronic device, and the storage medium provided by the embodiments of the present disclosure, after the target music is generated by the target application, the publishing page corresponding to the target music is displayed in the target application, where the video generation control for generating the singing video matching the target music is configured in the publishing page; in response to the first trigger operation for the video generation control, the first video generation page is displayed in the target application, where the first video generation page is configured to display the at least one video material; and in response to the second trigger operation for the first video generation page, the target video material is determined and the singing video is generated based on the target video material, where the singing video and the target video material include the same target object, and the mouth action of the target object in the singing video matches the music content of the target music. By configuring the video generation control in the publishing page after the intelligently generated music is generated, the client may directly jump to the first video generation page for generating the singing video matching the intelligently generated music after the intelligently generated music is generated, and display the corresponding video materials. Then, based on the selected target video material, the singing video including the target object that is consistent with that of the target video material and that may perform the mouth action matching the music content, that is, the "mouth-syncing" video matching the target music, is generated. This process does not need to be implemented by other third-party software, so the generation efficiency of the singing video is improved. Moreover, because no cross-platform image transmission is involved, the audio and image compression process is avoided, so the matching degree between the generated singing video and the intelligently generated music and the video clarity may be higher, and video effect may be better.

In the present disclosure, the "mouth action" through the description may be also referred to as lip movement, lip shape movement, lip action, lip shape action, or the like.

The following explains the application scenarios of the embodiments of the present disclosure:

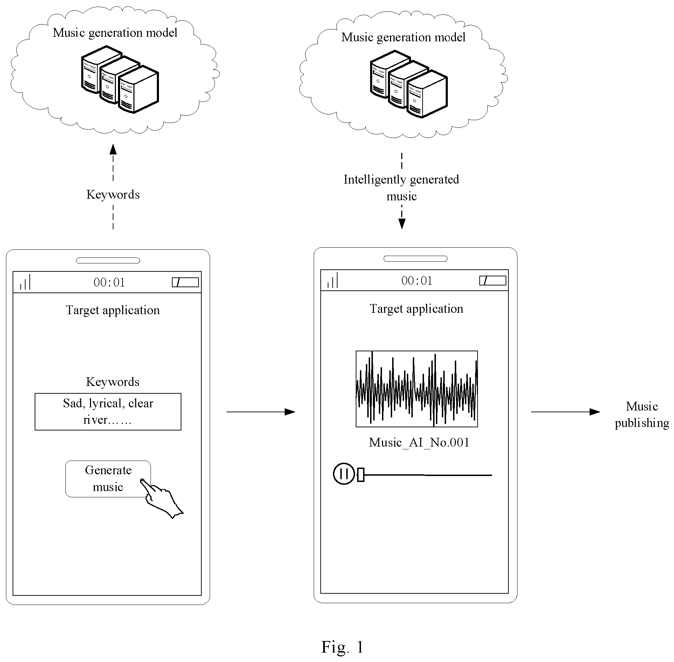

Fig. 1 is an application scenario diagram of a singing video generation method provided by an embodiment of the present disclosure. The singing video generation method provided by this embodiment of the present disclosure may be applied to applications (APPs, Applications) with music generation and video generation functions, such as music applications, short video applications, etc. More specifically, it may be applied to an application scenario of generating a corresponding singing video for intelligently generated music and producing an intelligently generated music video. The execution body of this embodiment may be a terminal device running the above-mentioned application with the music generation function or the video generation function, a server deploying the server corresponding to the above-mentioned application, or other electronic devices playing a similar role. When the execution body is a terminal device, the terminal device executes the method provided by this embodiment by running the above-mentioned application; and when the execution body is a server, the server of the above-mentioned application with the music generation function or the video generation function may run partly or entirely on the server, and the method provided by this embodiment is executed on the server side, while the terminal device runs the client of the application, and the server and the terminal device communicate based on the server-client communication, so that the terminal device may obtain the execution result of the method provided by this embodiment and display it according to the needs.

In some embodiments, the terminal device or the server may implement the singing video generation method provided by the embodiments of the present disclosure by running various computer-executable instructions or computer programs. For example, the computer-executable instructions may be program-level commands, machine instructions, or software instructions. The computer program may be a native program or a software module in an operating system; may be a local application, that is, a program that needs to be installed in the operating system to run, or may be a mini-program embedded in any APP, that is, a program that runs based on a browser environment. In summary, the above computer-executable instructions may be instructions in any form, and the above computer program may be an application, a module, or a plugin in any form, and the specific implementation form may be configured as needed. Further, in the process of implementing the singing video generation method provided by the embodiments of the present disclosure, the terminal device may execute the method by running computer-executable instructions or a computer program set locally, or may execute the method by calling computer-executable instructions or a computer program set in an external server. In some embodiments, the server may be an independent physical server, a server cluster or a distributed system composed of multiple physical servers, or may be a cloud server that provides cloud services, cloud storage, cloud communication, cloud databases, cloud computing, cloud functions, network services, middleware services, domain name services, security services, content delivery networks (Content Delivery Network, CDN), and basic cloud computing services such as big data and artificial intelligence platforms, where the cloud services may be interactive processing services for the terminal device to call.

As shown in Fig. 1, taking the terminal device as an example, a target application with a music generation function runs in the terminal device. After the target application is launched, the user operates the terminal device to input keywords for generating music into the target application, as shown in the figure, including: "sad", "lyric", "clear river", and so on. After that, based on the above keywords, the target application calls a music generation model deployed in the cloud to generate a corresponding "original song", that is, intelligently generated music (shown as Music_AI_No.001 in the figure), which is sent back to the terminal device for playing and display. After that, the user may further add a cover picture to the intelligently generated music and publish it to an Internet platform (music platform) corresponding to the target application, so as to realize the propagation of the intelligently generated music.

In the related technology, in the above application scenario, after the user generates the intelligently generated music by the intelligent generation technology, the intelligently generated music may be propagated by means of platform publishing, sharing, etc. However, due to the absence of a matching singing video, the propagation effect of the intelligently generated music is poor. In the related technology, an additional third-party image generation software may be used to generate a singing video matching the intelligently generated music based on the intelligent image generation technology, which may also be called a "mouth-syncing video". After that, the user may publish or share the singing video on the original intelligently generated music generation platform, thereby improving the propagation effect of the created intelligently generated music. However, because the generated intelligently generated music needs to be generated and transmitted across platforms, on the one hand, it will lead to additional operations and waiting time of the user, affecting the efficiency of video production; on the other hand, in the process of intelligently generated music transmission, the audio data needs to be transmitted to a third-party software for processing; in the process, the intelligently generated music needs to be compressed, resulting in the loss of music details, so that the generated singing video has a problem of low content matching degree with the intelligently generated music. That is, in the above process of generating a corresponding video for the intelligently generated music, there are problems of low interaction efficiency and low matching degree between the generated video and the intelligently generated music.

An embodiment of the present disclosure provides a singing video generation method to solve the above-mentioned problems.

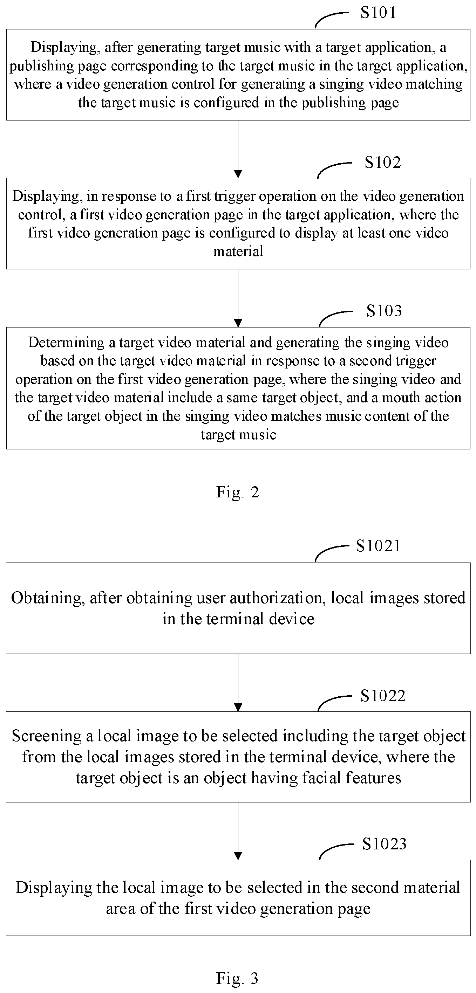

Referring to Fig. 2, Fig. 2 is a first flowchart of a singing video generation method provided by an embodiment of the present disclosure. The method of this embodiment may be applied to a terminal device, and the singing video generation method includes:
step S101: displaying, after generating target music with a target application, a publishing page corresponding to the target music in the target application, where a video generation control for generating a singing video matching the target music is configured in the publishing page;
step S102: displaying, in response to a first trigger operation on the video generation control, a first video generation page in the target application, where the first video generation page is configured to display at least one video material; and
step S103: determining a target video material and generating the singing video based on the target video material in response to a second trigger operation for the first video generation page, where the singing video and the target video material include a same target object, and a mouth action (or mouth shape action) of the target object in the singing video matches music content of the target music.

Exemplarily, referring to the schematic diagram of the application scenario shown in Fig. 1, the terminal device generates target music, that is, intelligently generated music, based on an intelligent generation technology by running a target application with a music generation function. The process of generating such intelligently generated music based on the intelligent generation technology usually includes the steps of receiving keywords input by the user and calling a pre-trained music generation module to generate music matching the keywords in combination with the keywords, which will not be expanded in this introduction. After that, after the target music is generated, the target application jumps to the publishing page corresponding to the target music, and the video generation control for generating the singing video matching the target music is configured in the publishing page; the user may generate the singing video of the target music in the current target application by means of the video generation control.

Specifically, after receiving the first trigger operation on the video generation control, the terminal device controls the target application to display the first video generation page in the target application, and the first video generation page is configured to display at least one video material; the video material is a material file used for generating the singing video, such as a picture including facial features.

After that, the terminal device may determine, in response to the second trigger operation on the user for the first video generation page, a target video material in the first video generation page. In a possible implementation, the second trigger operation is a selection operation for the video material in the first video generation page, and the target video material is determined from the first video generation page by responding to the selection operation. In another possible implementation, the terminal device automatically selects a default video material as the target video material, or determines a recommended video material as the target video material through calculation, and the second trigger operation is a confirmation operation for the above-mentioned default video material or recommended video material, such as an operation of clicking a "confirm" control in the first video generation page, so that the terminal device determines the final target video material in response to the second trigger operation.

After the target video material is determined, the terminal device generates the singing video based on the target video material, thereby completing the process of generating the singing video matching the target music. The target video material includes a target object, exemplarily, such as a person, a small animal, or other objects with facial features. The terminal device calls a video generation model to process the target video material to generate a video that is equal (or similar) in duration to the target music, includes the same target object, and in which the target object has a mouth action matching the lyrics and/or melody of the target music, that is, the singing video corresponding to the target music. Specifically, the singing video and the target video material include the same target object, and the mouth action of the target object in the singing video matches the music content of the target music means that the video content of the singing video includes: the mouth of the target object (a pet dog) in the target video material (such as a photo of the pet dog) dynamically changes with the music melody and content, so as to show that the target object (the pet dog) is singing the current target song.

The video generation model may be entirely deployed locally on the terminal device, entirely deployed on the cloud, or partly deployed locally and partly deployed on the cloud, and the specific implementation may be set as needed. The video generation model is a pre-trained model, and the video generation model has the ability to output a video clip according to a piece of music (corresponding file) and a picture, and the specific implementation and training process thereof will not be repeated here.

Further, in a possible implementation, a first material area and a second material area are configured in the first video generation page, where the first material area is used to display a video generation template from the cloud or cached locally, and the second material area is used to display a local image stored in the terminal device.

Exemplarily, the video generation template displayed in the first material area is a file set or an information set for generating the singing video, which includes at least one template picture and may also include information such as video effect parameters. The video generation template may be a template uploaded by other users, which is used to implement a singing video in a specific style and with a specific target object (such as a person, an animal) to sing a song, thereby achieving the purpose and effect of "remaking the same style video". The ontology may be stored in the cloud and previewed locally on the terminal device. The local image displayed in the second material area is an image stored in the terminal device running the target application currently, and is displayed in the second material area after obtaining user authorization.

Further, for the content displayed in the second material area in the first video generation page, in a possible implementation, as shown in Fig. 3, the specific implementation of step S102 includes:
step S1021: obtaining local images stored in the terminal device after obtaining user authorization;
step S1022: screening a local image to be selected that includes the target object from the local images stored in the terminal device, where the target object is an object having facial features; and
step S1023: displaying the local image to be selected in the second material area of the first video generation page.

In this embodiment, before displaying the first video generation page in the target application, considering a problem that the number of the local images is large and not all of them are suitable for generating the singing video, the terminal device first obtains the local image stored in the terminal device after obtaining the user authorization, and screens the local images, specifically, performs feature detection on the local images, determines an image including the facial features as the local image to be selected that includes the target object, and displays the local image to be selected in the second material area of the first video generation page, thereby completing the display process of the first video generation page. Because the generated singing video needs to display the mouth action, it is required that the image for generating the singing video is also able to clearly show the face and mouth in a static condition. In the steps of this embodiment, the local image to be selected is an image that is screened by the terminal device and includes the target object with the facial features, which may avoid the subsequent problem that the mouth area cannot be matched, resulting in the distortion of the generated singing video, thereby improving the authenticity of the generated singing video.

On the other hand, for the content displayed in the first material area in the first video generation page, that is, the video generation template, personalized push may be performed by the cloud and the content is displayed in the first material area in the first video generation page, which will not be repeated in this introduction.

Further, after the first video generation page is displayed, the specific implementation of step S103 includes two types, where a possible implementation includes:
step S103A: determining a target video generation template and generating the singing video based on the target video generation template in response to the second trigger operation on the first material area.

Another possible implementation of step S103 includes:
step S103B: determining a target local image and generating the singing video based on the target local image in response to the second trigger operation on the second material area.

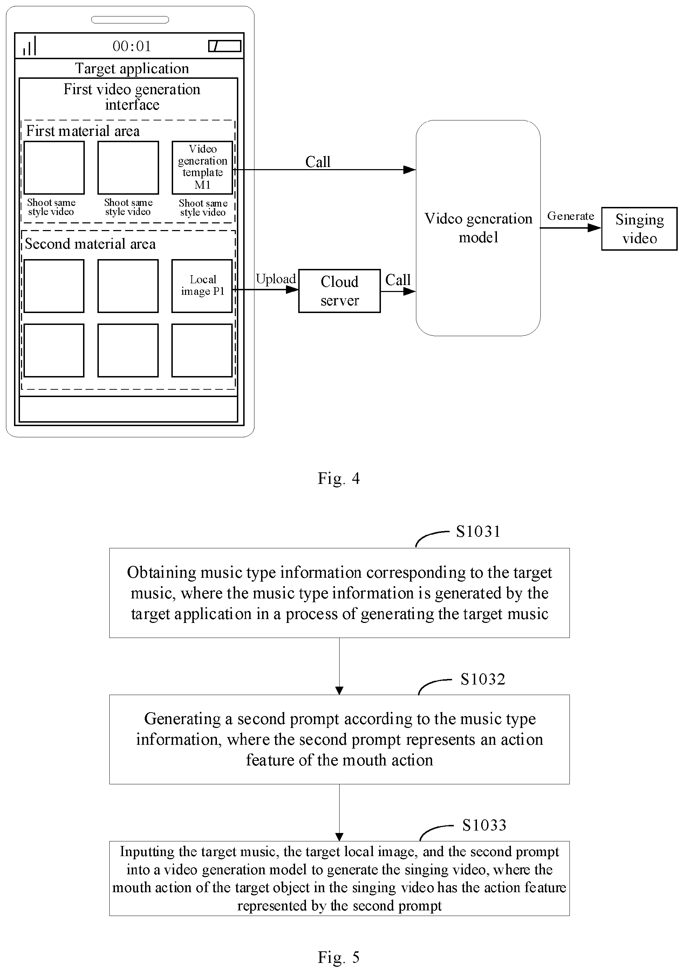

Fig. 4 is a schematic diagram of a first video generation page provided by an embodiment of the present disclosure. The above process will be described in detail below in conjunction with Fig. 4. As shown in Fig. 4, exemplarily, first, after jumping from the publishing page to the first video generation page, the upper half of the first video generation page is the first material area for displaying the video generation templates from the cloud; under each video generation template, description information of the usage method of the video generation template is displayed, for example, "shoot same style video" as shown in the figure, so as to implement the usage guidance of the video generation template; the lower half of the first video generation page is the second material area for displaying the local images stored in the terminal device. After that, when the user clicks on a target video generation template in the first material area, such as the video generation template M1 shown in the figure, the terminal device calls the video generation model deployed in the cloud to process the video generation template M1 and the target music, thereby generating the singing video based on the style of the video generation template M1. When the user clicks on a target local image in the second material area, such as the local image P1 shown in the figure, the terminal device uploads the local image P1 to the cloud server, and then calls the video generation model to process the local image P1 and the target music, thereby generating the singing video based on the local image P1.

Certainly, in another possible implementation, the first video generation page may only include the first material area or the second material area mentioned above, that is, only the video generation template or the local image is displayed, and the specific implementation and the corresponding interaction mode are similar to those mentioned above, and will not be repeated.

Further, in a possible implementation, after the target video material is determined, the method further includes:
step S103C: obtaining an image content feature of the target video material; and displaying, in response to the image content feature not satisfying a preset feature requirement, prompt information.

Exemplarily, after the target video material is determined, for example, after the target local image in the above embodiment is determined, in order to ensure that the target local image meets the requirements for generating the singing video (that is, the image includes the target object), in this embodiment, the terminal device determines whether the target local image selected by the user may be used as source data for generating the singing video by detecting the image content feature of the target local image. If it is determined that the target local image includes a preset feature, such as a facial contour feature and a mouth feature, according to the image content feature of the target local image, the subsequent steps are continued to be executed. If the preset feature requirement is not met, the prompt information is displayed to prompt the user to replace the image, thereby avoiding the problem that the singing video cannot be generated due to the user's misoperation.

Further, in a possible implementation, as shown in Fig. 5, after the target video material is determined, the specific implementation of generating the singing video based on the target video material includes:
step S1031: obtaining music type information corresponding to the target music, where the music type information is generated by the target application in a process of generating the target music;
step S1032: generating a second prompt according to the music type information, where the second prompt represents an action feature of the mouth action; and
step S1033: inputting the target music, the target local image, and the second prompt into a video generation model to generate the singing video, where the mouth action of the target object in the singing video has the action feature represented by the second prompt.

Exemplarily, taking the case where the target video material is a local image as an example, after determining the target local image, the terminal device first obtains the music type information corresponding to the target music generated in the previous step, and the music type information is information used to classify the type and style of music; more specifically, the music type information corresponding to the target music includes, for example, pop, rock, opera, etc. (divided by song category); or includes lyric, dynamic, sad, etc. (divided by emotional style). In a specific implementation, the music type information may be a specific classification identification, which is not specifically limited. After that, the terminal device converts the music type information into a corresponding second prompt according to preset configuration information, and the second prompt represents the action feature of the mouth action, such as the frequency and amplitude of mouth shape change, thereby realizing the mapping from the music type information to the mouth action. Finally, the second prompt representing the action feature of the mouth action, together with the target music and the target local image, is input into the video generation model to generate the singing video. The second prompt is used to control the generation process of the singing video, so that the mouth action of the target object in the generated singing video has the action feature represented by the second prompt, thereby improving the realness and the matching degree between the singing video and the target music.

At the same time, it should be noted that the solution provided by this embodiment is completed within the same software or platform (target application), which avoids the process of transmitting relevant information of the target music across platforms compared with other solutions in the related technology. Therefore, in this embodiment, because the music type information is generated by the target application in the process of generating the target music, the terminal device may efficiently and accurately implement step S1031 to obtain the music type information. Compared with the music type information obtained by processing methods such as parsing and feature recognition of the target music in a conventional solution, higher accuracy and execution efficiency are achieved.

In the embodiments of the present disclosure, after the target music is generated by the target application, the publishing page corresponding to the target music is displayed in the target application, where the video generation control for generating the singing video matching the target music is configured in the publishing page; in response to the first trigger operation on the video generation control, the first video generation page is displayed in the target application, where the first video generation page is configured to display the at least one video material; and in response to the second trigger operation on the first video generation page, the target video material is determined and the singing video is generated based on the target video material, where the singing video and the target video material include the same target object, and the mouth action of the target object in the singing video matches the music content of the target music. By configuring the video generation control in the publishing page after the intelligently generated music is generated, the client may directly jump to the first video generation page for generating the singing video matching the intelligently generated music after the intelligently generated music is generated, and display the corresponding video material. Then, based on the selected target video material, the singing video including the target object that is consistent with that of the target video material and that may perform the mouth action matching the music content, that is, the "mouth-syncing" video matching the target music, is generated. This process does not need to be implemented by other third-party software, so the generation efficiency of the singing video is improved. Moreover, because no cross-platform image transmission is involved, the audio and image compression process is avoided, so the matching degree between the generated singing video and the intelligently generated music and the video clarity may be higher, and video effect may be better.

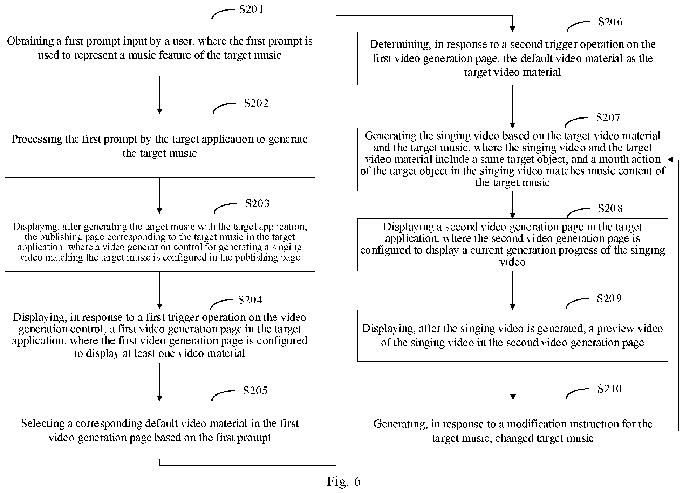

Referring to Fig. 6, Fig. 6 is a second flowchart of a singing video generation method provided by an embodiment of the present disclosure. On the basis of the embodiment shown in Fig. 2, this embodiment further refines the solution, and optionally adds pre-steps of generating the target music. The singing video generation method includes:
Step S201: obtaining a first prompt input by a user, where the first prompt is used to represent a music feature of the target music.
Step S202: processing the first prompt by the target application to generate the target music.

Exemplarily, in this embodiment, a specific implementation step of generating the target music is added, that is, obtaining the first prompt input by the user and then calling a music generation model using the target application to generate the target music. In this step, the first prompt input by the user is cached locally by the terminal device, and the first prompt is used to select the default material in a subsequent step, thereby improving the operation efficiency in the process of generating the singing video.

Step S203: displaying, after generating the target music with the target application, the publishing page corresponding to the target music in the target application, where a video generation control for generating a singing video matching the target music is configured in the publishing page.

Step S204: displaying, in response to a first trigger operation on the video generation control, a first video generation page in the target application, where the first video generation page is configured to display at least one video material.

Step S205: selecting a corresponding default video material in the first video generation page based on the first prompt.

Exemplarily, in this embodiment, in combination with the solution of steps S201-S202, after the first video generation page is displayed in the target application, a possible implementation is to select one of the video materials as the target video material by responding to the trigger operation input by the user. In the steps of this embodiment, the terminal device automatically determines a video material, that is, the default video material, in combination with the first prompt obtained in the previous process of generating the target music. The first prompt represents the music feature of the target music, and therefore, the video material generated based on the first prompt is also a video material that matches the music feature of the target music. Using the default video material as the target video material and performing the subsequent steps of generating the singing video may make the generated singing video more in line with the music feature (such as music melody and music lyrics) of the target music, thereby providing the realness of the singing video.

Step S206: determining, in response to a second trigger operation on the first video generation page, the default video material as the target video material.

Step S207: generating the singing video based on the target video material and the target music, where the singing video and the target video material include a same target object, and a mouth action of the target object in the singing video matches music content of the target music.

Exemplarily, in combination with the previous steps, after the terminal device selects the corresponding default video material, the second trigger operation is, for example, a confirmation operation, that is, an operation of confirming the default video material as the target video material. After that, the terminal device generates the corresponding singing music by calling the video generation model based on the obtained target video material.

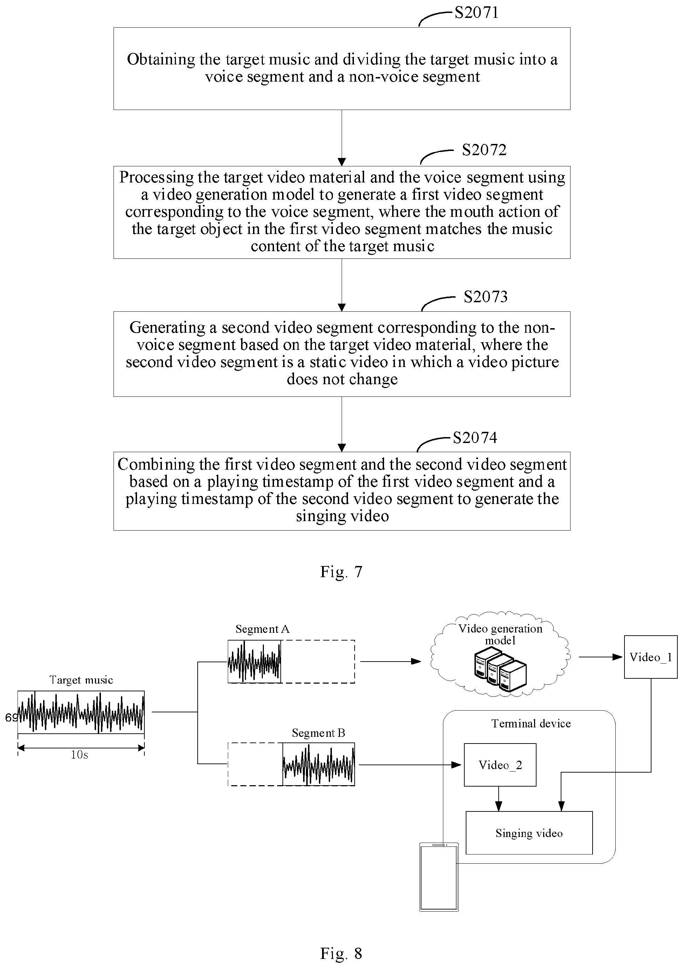

Further, in a possible implementation, as shown in Fig. 7, the specific implementation of step S207 includes:
step S2071: obtaining the target music and dividing the target music into a voice segment and a non-voice segment;
step S2072: processing the target video material and the voice segment using a video generation model to generate a first video segment corresponding to the voice segment, where the mouth action of the target object in the first video segment matches the music content of the target music;
step S2073: generating a second video segment corresponding to the non-voice segment based on the target video material, where the second video segment is a static video in which a video picture does not change; and
step S2074: combining the first video segment and the second video segment based on a playing timestamp of the first video segment and a playing timestamp of the second video segment to generate the singing video.

After obtaining the previously generated target music by the target application, the terminal device divides the target music into the voice segment and the non-voice segment, where the voice segment is a segment corresponding to a voice part in the target music, in other words, a segment in which the target object in the corresponding singing video needs to perform the mouth action. On the contrary, the non-voice segment is a segment corresponding to a non-voice part in the target music, in other words, a segment in which the target object in the corresponding singing video does not need to perform the mouth action. The voice segment and the non-voice segment may be represented by a pair of timestamps. Further, for the specific implementation of dividing the voice segment and the non-voice segment, a possible implementation is to divide the voice segment and the non-voice segment by parsing audio features of the target music and performing voice recognition; another possible implementation is to divide the voice segment and the non-voice segment by reading music information (such as lyric text and corresponding timestamps) corresponding to the target music, which may be specifically set as needed. After that, the target video material and the voice segment are processed using the video generation model to generate the first video segment corresponding to the voice segment, that is, the "mouth-syncing video" for the voice segment; for the non-voice segment, the static video, that is, the second video segment, is directly generated using the target video material. Finally, the first video segment and the second video segment are combined based on the playing timestamp of the first video segment and the playing timestamp of the second video segment to generate the singing video.

Fig. 8 is a schematic diagram of a process of generating a singing video provided by an embodiment of the present disclosure. The above steps will be described in detail below in conjunction with Fig. 8. As shown in Fig. 8, the target music is an audio with a duration of 10s (seconds); by parsing the target music, it is divided into a voice segment (shown as segment A in the figure) and a non-voice segment (shown as segment B in the figure), for example, the voice segment is the first 4 seconds of the target music, and the non-voice segment is the last 6 seconds of the target music. After that, the terminal device uploads the voice segment of the target music and the target video material to the video generation model in the cloud, and the corresponding first video segment, that is, the video segment Video_1, is generated with the video generation model. On the other hand, the terminal device uses the target video material locally to generate the second video segment, that is, the video segment Video_2, in which the video picture does not change; or sends the target video material to the cloud server to generate the second video segment in which the video picture does not change (this case is not shown in the figure). Finally, the terminal device combines the video segment Video_1 and the video segment Video_2 locally to generate the singing video. Alternatively, the terminal device uploads the video segment Video_2 locally to the cloud server, and the cloud server combines the video segment Video_1 and the video segment Video_2 to generate the singing video, which is sent back to the terminal device (this case is not shown in the figure).

In the steps of this embodiment, the target music is divided into the voice segment and the non-voice segment, which are processed separately to generate the corresponding video segments, and the singing video is generated by combining the video segments, which saves the model resource overhead for generating the static picture corresponding to the non-voice segment in the singing video, reduces the network resource overhead of the server and the model pressure of the video generation model, and improves the generation efficiency of the singing video.

Optionally, in this embodiment, in the process of performing step S207, this embodiment further includes:
step S208: displaying a second video generation page in the target application, where the second video generation page is configured to display a current generation progress of the singing video.

Optionally, after step S207 is completed, this embodiment further includes:
step S209: displaying, after the singing video is generated, a preview video of the singing video in the second video generation page.

Exemplarily, because the singing video needs to be generated by calling the video generation model, considering the load of model resources, the video generation model usually needs to queue up to process requests for generating the singing video sent by the terminal devices during high-concurrency tasks. Therefore, the user usually needs to wait for the generation of the singing video to be completed. In this embodiment, in the process of generating the singing video, the second video generation page is displayed in the target application, and the current generation progress of the singing video is displayed through the second video generation page; and after the singing video is generated, the preview video of the singing video is displayed in the second video generation page, so that the user may know the remaining time and perform other operations within the remaining time, thereby improving the operation efficiency of the target application.

Optionally, this embodiment further includes:
step S209A: switching, in response to a third trigger operation on the second video generation page, the second video generation page to background running; and
step S209B: canceling the generation of the singing video and returning to the first video generation page or the publishing page in response to a fourth trigger operation on the second video generation page.

Exemplarily, in combination with the steps of the previous embodiments, in the process of generating the singing video, the terminal device may further switch, in response to the third trigger operation on the second video generation page, the second video generation page to background running, thereby performing other functions in the target application and improving the efficiency of operating the target application; or in response to the fourth trigger operation on the second video generation page, cancel the generation of the singing video and return to the first video generation page or the publishing page, thereby interrupting the generation process of the singing video, and performing subsequent steps of modifying and re-generating the singing video, which may also improve the efficiency of operating the target application and generating the final singing video.

Optionally, this embodiment further includes:
step S210: generating, in response to a modification instruction for the target music, changed target music, and returning to step S207.

Exemplarily, after the target music is generated, the terminal device may re-modify the target music with the target application in response to the modification instruction input by the user, for example, modifying a prompt (such as the first prompt in the steps of the previous embodiment) when the target music is generated, or modifying the lyrics of the target music, to re-generate the target music entirely or partially, that is, generate the changed target music. After that, by utilizing the feature that the target music and the singing video are generated in the same target application, the terminal device may re-generate the singing video based on the changed target music and the target video material (that is, return to step S207), to quickly re-generate the singing video without repeating the above steps such as selecting the target video material, thereby realizing the effect of synchronously modifying the corresponding singing video after the intelligently generated music is modified, and improving the operation efficiency of adjusting the singing video.

In this embodiment, the implementation of step S203 is the same as that of step S101 in the embodiment shown in Fig. 2 of the present disclosure, which will not be repeated here.

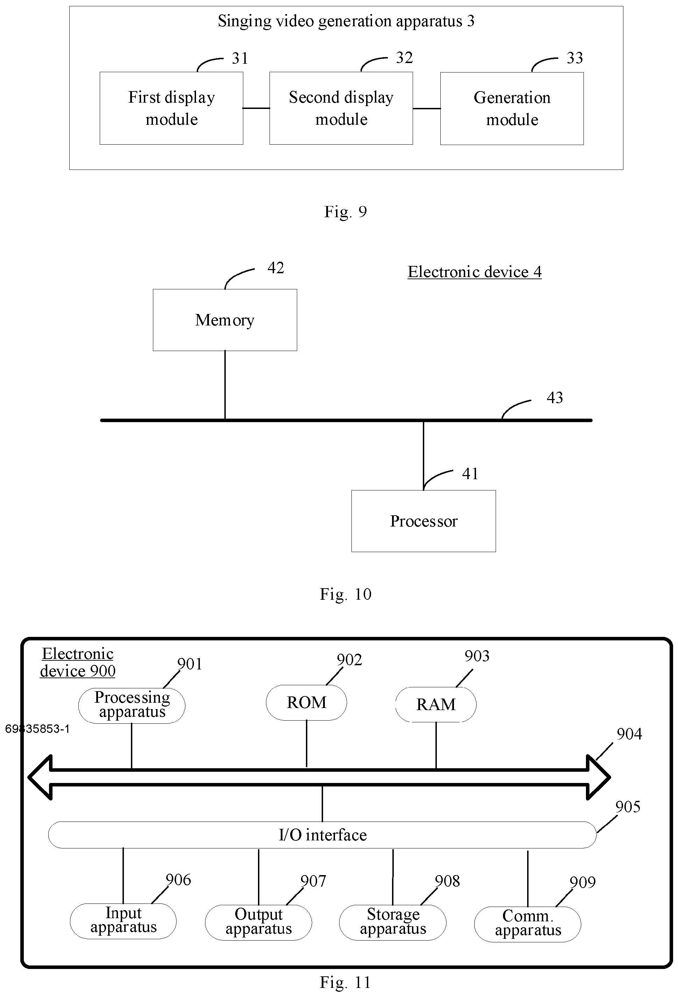

Corresponding to the singing video generation method of the above embodiments, Fig. 9 is a structural block diagram of a singing video generation apparatus provided by an embodiment of the present disclosure. The method introduced in the above embodiments may be performed by the singing video generation apparatus, which may be implemented by software and/or hardware, and may be integrated into an electronic device with a certain data processing capability. The electronic device may include, but is not limited to, a mobile terminal with big data processing capability, and a fixed terminal with big data processing capability, such as a desktop computer and a supercomputer.

For ease of description, only parts related to the embodiments of the present disclosure are shown. Referring to Fig. 9, the singing video generation apparatus 3 includes:
a first display module 31, configured to display a publishing page after target music is generated, where a video generation control for generating a singing video matching the target music is configured in the publishing page;
a second display module 32, configured to display, in response to a first trigger operation on the video generation control, a first video generation page in the target application, where the first video generation page is configured to display at least one video material; and
a generation module 33, configured to determine a target video material and generate the singing video based on the target video material in response to a second trigger operation on the first video generation page, where the singing video and the target video material include a same target object, and a mouth action of the target object in the singing video matches music content of the target music.

According to one or more embodiments of the present disclosure, a first material area and a second material area are configured in the first video generation page, where the first material area is used to display a video generation template, and the second material area is used to display a local image stored in the terminal device; the generation module 33 is further configured to: determine a target video generation template and generate the singing video based on the target video generation template in response to the second trigger operation on the first material area; or determine a target local image and generate the singing video based on the target local image in response to the second trigger operation on the second material area.

According to one or more embodiments of the present disclosure, when displaying the first video generation page in the target application, the second display module 32 is further configured to: obtain local images stored in the terminal device after obtaining user authorization; screen a local image to be selected that includes the target object from the local images stored in the terminal device, where the target object is an object having facial features; and display the local image to be selected in the second material area of the first video generation page.

According to one or more embodiments of the present disclosure, when generating the singing video based on the target local image, the generation module 33 is further configured to: obtain music type information corresponding to the target music; generate a second prompt according to the music type information, where the second prompt represents an action feature of the mouth action; and input the target music, the target local image, and the second prompt into a video generation model to generate the singing video, where the mouth action of the target object in the singing video has the action feature represented by the second prompt.

According to one or more embodiments of the present disclosure, before generating the target music, the generation module 33 is further configured to: obtain a first prompt input by a user, where the first prompt is used to represent a music feature of the target music; and process the first prompt by the target application to generate the target music; after displaying, in response to the first trigger operation on the video generation control the first video generation page in the target application, the second display module 32 is further configured to: select a corresponding default video material in the first video generation page based on the first prompt.

According to one or more embodiments of the present disclosure, after generating the singing video based on the target video material, the generation module 33 is further configured to: generate, in response to a modification instruction for the target music, changed target music; and re-generate the singing video based on the changed target music and the target video material.

According to one or more embodiments of the present disclosure, after the target video material is determined, the generation module 33 is further configured to: display a second video generation page in the target application, where the second video generation page is configured to display a current generation progress of the singing video; and display, after the singing video is generated, a preview video of the singing video in the second video generation page.

According to one or more embodiments of the present disclosure, the generation module 33 is further configured to perform at least one of the following: switch, in response to a third trigger operation on the second video generation page, the second video generation page to background running; and cancel the generation of the singing video and return to the first video generation page or the publishing page in response to a fourth trigger operation on the second video generation page.

According to one or more embodiments of the present disclosure, after the target video material is determined, the generation module 33 is further configured to: obtain an image content feature of the target video material; and display prompt information in response to the image content feature not satisfying a preset feature requirement.

According to one or more embodiments of the present disclosure, when generating the singing video based on the target video material, the generation module 33 is further configured to: obtain the target music and divide the target music into a voice segment and a non-voice segment; process the target video material and the voice segment using a video generation model to generate a first video segment corresponding to the voice segment, where the mouth action of the target object in the first video segment matches the music content of the target music; generate a second video segment corresponding to the non-voice segment based on the target video material, where the second video segment is a static video in which a video picture does not change; and combine the first video segment and the second video segment based on a playing timestamp of the first video segment and a playing timestamp of the second video segment to generate the singing video.

The first display module 31, the second display module 32, and the generation module 33 are connected in sequence. The singing video generation apparatus 3 provided by this embodiment may perform the technical solutions of the above method embodiments, and the implementation principles and technical effects thereof are similar, which will not be repeated here in this embodiment.

Fig. 10 is a schematic structural diagram of an electronic device provided by an embodiment of the present disclosure. As shown in Fig. 10, the electronic device 4 includes:
a processor 41 and a memory 42 communicatively connected to the processor 41;
where the memory 42 stores computer-executable instructions; and
the processor 41 executes the computer-executable instructions stored in the memory 42 to implement the singing video generation method in the embodiments shown in Fig. 2 to Fig. 8.

Optionally, the processor 41 and the memory 42 are connected through a bus 43.

The relevant descriptions may be understood by referring to the relevant descriptions and effects corresponding to the steps in the embodiments corresponding to Fig. 2 to Fig. 8, and details are not repeated here.

An embodiment of the present disclosure provides a computer-readable storage medium, where computer-executable instructions are stored in the computer-readable storage medium, and the computer-executable instructions, when executed by a processor, implement the singing video generation method provided by any one of the embodiments corresponding to Fig. 2 to Fig. 8 of the present disclosure.

An embodiment of the present disclosure provides a computer program product, including a computer program, where the computer program, when executed by a processor, implements the singing video generation method provided by any one of the embodiments corresponding to Fig. 2 to Fig. 8 of the present disclosure.

In order to implement the above embodiments, an embodiment of the present disclosure further provides an electronic device.

Reference is made to Fig. 11, which shows a schematic structural diagram of an electronic device 900 suitable for implementing the embodiments of the present disclosure, and the electronic device 900 may be a terminal device or a server. The terminal device may include, but is not limited to, mobile terminals such as a mobile phone, a notebook computer, a digital broadcast receiver, a personal digital assistant (abbreviated as PDA), a tablet computer, a portable media player (abbreviated as PMP), a vehicle-mounted terminal (such as a vehicle navigation terminal), and the like, and fixed terminals such as a digital TV, a desktop computer, and the like. The electronic device shown in Fig. 11 is only an example, and should not impose any limitation on the functions and scope of use of the embodiments of the present disclosure.

As shown in Fig. 11, the electronic device 900 may include a processing apparatus (such as a central processing unit, a graphics processor, etc.) 901, which may perform various appropriate actions and processing according to a program stored in a read-only memory (abbreviated as ROM) 902 or a program loaded from a storage apparatus 908 into a random access memory (abbreviated as RAM) 903. In the RAM 903, various programs and data required for the operation of the electronic device 900 are also stored. The processing apparatus 901, the ROM 902, and the RAM 903 are connected to each other through a bus 904. An input/output (I/O) interface 905 is also connected to the bus 904.

Usually, the following apparatuses may be connected to the I/O interface 905: an input apparatus 906 including, for example, a touch screen, a touchpad, a keyboard, a mouse, a camera, a microphone, an accelerometer, a gyroscope, or the like; an output apparatus 907 including, for example, a liquid crystal display (abbreviated as LCD), a speaker, a vibrator, or the like; a storage apparatus 908 including, for example, a magnetic tape, a hard disk, or the like; and a communication apparatus 909. The communication apparatus 909 may allow the electronic device 900 to perform wireless or wired communication with other devices to exchange data. Although Fig. 11 shows the electronic device 900 having various apparatuses, it should be understood that it is not required to implement or have all the apparatuses shown. More or fewer apparatuses may be implemented or provided alternatively.

In particular, according to the embodiments of the present disclosure, the process described above with reference to the flowchart may be implemented as a computer software program. For example, this embodiment of the present disclosure includes a computer program product, which includes a computer program carried on a computer-readable medium, where the computer program contains program code for performing the method shown in the flowchart. In such an embodiment, the computer program may be downloaded and installed from a network through the communication apparatus 909, or installed from the storage apparatus 908, or installed from the ROM 902. When the computer program is executed by the processing apparatus 901, the foregoing functions defined in the method of the embodiments of the present disclosure are executed.

It should be noted that the foregoing computer-readable medium in the present disclosure may be a computer-readable signal medium, a computer-readable storage medium, or any combination thereof. The computer-readable storage medium may be, for example, but is not limited to, an electrical, magnetic, optical, electromagnetic, infrared, or semiconductor system, apparatus, device, or any combination thereof. More specific examples of the computer-readable storage medium may include, but are not limited to, an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, a computer-readable storage medium may be any tangible medium that contains or stores a program, and the program may be used by or used in combination with an instruction execution system, apparatus, or device. In the present disclosure, a computer-readable signal medium may include a data signal propagated on a baseband or as a part of a carrier, and computer-readable program code is carried in the data signal. This propagated data signal may be in multiple forms, and includes, but is not limited to, an electromagnetic signal, an optical signal, or any suitable combination thereof. The computer-readable signal medium may also be any computer-readable medium other than the computer-readable storage medium, and the computer-readable signal medium may send, propagate, or transmit the program used by or in combination with the instruction execution system, apparatus, or device. The program code contained on the computer-readable medium may be transmitted in any suitable medium, including but not limited to a wire, an optical cable, an RF (radio frequency), or any suitable combination thereof.

The above computer-readable medium may be contained in the above electronic device, or may exist alone without being assembled into the electronic device.

The above computer-readable medium carries one or more programs, and when the one or more programs are executed by the electronic device, the electronic device is caused to perform the method shown in the above embodiments.

The computer program code for performing the operations of the present disclosure may be written in one or more programming languages or a combination thereof, where the above programming languages include object-oriented programming languages such as Java, Smalltalk, C++, and also conventional procedural programming languages such as "C" language or similar programming languages. The program code may be executed entirely on a user's computer, partly on a user's computer, as a stand-alone software package, partly on a user's computer and partly on a remote computer, or entirely on a remote computer or a server. In the case of involving a remote computer, the remote computer may be connected to a user's computer through any kind of network, including a local area network (abbreviated as LAN) or a wide area network (abbreviated as WAN), or it may be connected to an external computer (for example, connected by using Internet provided by an Internet service provider).

The flowcharts and block diagrams in the drawings illustrate the possibly implemented architectures, functions, and operations of the systems, methods, and computer program products according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and the combination of the blocks in the block diagram and/or the flowchart may be implemented by a dedicated hardware-based system that executes specified functions or operations, or may be implemented by a combination of dedicated hardware and computer instructions.

The involved units or modules described in the embodiments of the present disclosure may be implemented by software or by hardware. The name of a unit or module does not constitute a limitation on the unit itself under certain circumstances.

The functions described herein above may be performed at least in part by one or more hardware logic components. For example, without limitation, exemplary types of hardware logic components that may be used include: field programmable gate array (FPGA), application specific integrated circuit (ASIC), application specific standard product (ASSP), system on chip (SOC), complex programmable logic device (CPLD), etc.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of the machine-readable storage medium would include an electrical connection based on one or more lines, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above.

In a first aspect, according to one or more embodiments of the present disclosure, a singing video generation method is provided, including:
displaying, after generating target music with a target application, a publishing page corresponding to the target music in the target application, wherein a video generation control for generating a singing video matching the target music is configured in the publishing page; displaying, in response to a first trigger operation on the video generation control, a first video generation page in the target application, wherein the first video generation page is configured to display at least one video material; and determining a target video material and generating the singing video based on the target video material in response to a second trigger operation on the first video generation page, wherein the singing video and the target video material include a same target object, and a mouth action of the target object in the singing video matches music content of the target music.

According to one or more embodiments of the present disclosure, a first material area and a second material area are configured in the first video generation page, where the first material area is used to display a video generation template from cloud, and the second material area is used to display a local image stored in a terminal device; determining the target video material and generating the singing video based on the target video material in response to the second trigger operation on the first video generation page includes: determining a target video generation template and generating the singing video based on the target video generation template in response to the second trigger operation on the first material area; or determining a target local image and generating the singing video based on the target local image in response to the second trigger operation on the second material area.

According to one or more embodiments of the present disclosure, displaying the first video generation page in the target application includes: obtaining, after obtaining user authorization, local images stored in the terminal device; screening a local image to be selected comprising the target object from the local images stored in the terminal device, wherein the target object is an object having facial features; and displaying the local image to be selected in the second material area of the first video generation page.

According to one or more embodiments of the present disclosure, generating the singing video based on the target local image includes: obtaining music type information corresponding to the target music; generating a second prompt according to the music type information, where the second prompt represents an action feature of the mouth action; and inputting the target music, the target local image, and the second prompt into a video generation model to generate the singing video, where the mouth action of the target object in the singing video has the action feature represented by the second prompt.

According to one or more embodiments of the present disclosure, before generating the target music, the method further includes: obtaining a first prompt input by a user, where the first prompt is used to represent a music feature of the target music; and processing the first prompt by the target application to generate the target music; after displaying, in response to the first trigger operation on the video generation control, the first video generation page in the target application, the method further includes: selecting a corresponding default video material in the first video generation page based on the first prompt.

According to one or more embodiments of the present disclosure, after generating the singing video based on the target video material, the method further includes: generating, in response to a modification instruction for the target music, changed target music; and re-generating the singing video based on the changed target music and the target video material.

According to one or more embodiments of the present disclosure, after determining the target video material, the method further includes: displaying a second video generation page in the target application, where the second video generation page is configured to display a current generation progress of the singing video; and displaying, after the singing video is generated, a preview video of the singing video in the second video generation page.

According to one or more embodiments of the present disclosure, the method further includes at least one of the following: switching, in response to a third trigger operation on the second video generation page, the second video generation page to background running; or canceling the generation of the singing video and returning to the first video generation page or the publishing page in response to a fourth trigger operation on the second video generation page.

According to one or more embodiments of the present disclosure, after determining the target video material, the method further includes: obtaining an image content feature of the target video material; and displaying, in response to the image content feature not satisfying a preset feature requirement, prompt information.

According to one or more embodiments of the present disclosure, generating the singing video based on the target video material includes: obtaining the target music and dividing the target music into a voice segment and a non-voice segment; processing the target video material and the voice segment using a video generation model to generate a first video segment corresponding to the voice segment, where the mouth action of the target object in the first video segment matches the music content of the target music; generating a second video segment corresponding to the non-voice segment based on the target video material, where the second video segment is a static video in which a video picture does not change; and combining the first video segment and the second video segment based on a playing timestamp of the first video segment and a playing timestamp of the second video segment to generate the singing video.

In a second aspect, according to one or more embodiments of the present disclosure, a singing video generation apparatus is provided, including:
a first display module, configured to display a publishing page after target music is generated, wherein a video generation control for generating a singing video matching the target music is configured in the publishing page;
a second display module, configured to display, in response to a first trigger operation on the video generation control, a first video generation page in a target application, wherein the first video generation page is configured to display at least one video material; and
a generation module, configured to determine a target video material and generate the singing video based on the target video material in response to a second trigger operation on the first video generation page, wherein the singing video and the target video material include a same target object, and a mouth action of the target object in the singing video matches music content of the target music.

According to one or more embodiments of the present disclosure, a first material area and a second material area are configured in the first video generation page, where the first material area is used to display a video generation template, and the second material area is used to display a local image stored in the terminal device; the generation module is further configured to: determine a target video generation template and generate the singing video based on the target video generation template in response to the second trigger operation on the first material area; or determine a target local image and generate the singing video based on the target local image in response to the second trigger operation on the second material area.

According to one or more embodiments of the present disclosure, when displaying the first video generation page in the target application, the second display module is further configured to: obtain, after obtaining user authorization, local images stored in the terminal device; screen a local image to be selected comprising the target object from the local images stored in the terminal device, where the target object is an object having facial features; and display the local image to be selected in the second material area of the first video generation page.

According to one or more embodiments of the present disclosure, when generating the singing video based on the target local image, the generation module is further configured to: obtain music type information corresponding to the target music; generate a second prompt according to the music type information, where the second prompt represents an action feature of the mouth action; and input the target music, the target local image, and the second prompt into a video generation model to generate the singing video, where the mouth action of the target object in the singing video has the action feature represented by the second prompt.

According to one or more embodiments of the present disclosure, before generating the target music, the generation module is further configured to: obtain a first prompt input by a user, where the first prompt is used to represent a music feature of the target music; and process the first prompt by the target application to generate the target music; after displaying, in response to the first trigger operation on the video generation control, the first video generation page in the target application, the second display module is further configured to: select a corresponding default video material in the first video generation page based on the first prompt.

According to one or more embodiments of the present disclosure, after generating the singing video based on the target video material, the generation module is further configured to: generate, in response to a modification instruction for the target music, changed target music; and re-generate the singing video based on the changed target music and the target video material.

According to one or more embodiments of the present disclosure, after determining the target video material, the generation module is further configured to: display a second video generation page in the target application, where the second video generation page is configured to display a current generation progress of the singing video; and display, after the singing video is generated, a preview video of the singing video in the second video generation page.

According to one or more embodiments of the present disclosure, the generation module is further configured to perform at least one of the following: switch, in response to a third trigger operation on the second video generation page, the second video generation page to background running; and cancel the generation of the singing video and return to the first video generation page or the publishing page in response to a fourth trigger operation on the second video generation page.

According to one or more embodiments of the present disclosure, after determining the target video material, the generation module is further configured to: obtain an image content feature of the target video material; and display, in response to the image content feature not satisfying a preset feature requirement, prompt information.

According to one or more embodiments of the present disclosure, when generating the singing video based on the target video material, the generation module is further configured to: obtain the target music and divide the target music into a voice segment and a non-voice segment; process the target video material and the voice segment using a video generation model to generate a first video segment corresponding to the voice segment, where the mouth action of the target object in the first video segment matches the music content of the target music; generate a second video segment corresponding to the non-voice segment based on the target video material, where the second video segment is a static video in which a video picture does not change; and combine the first video segment and the second video segment based on a playing timestamp of the first video segment and a playing timestamp of the second video segment to generate the singing video.

In a third aspect, according to one or more embodiments of the present disclosure, an electronic device is provided, including: at least one processor and a memory;
where the memory stores computer-executable instructions; and
the processor executes the computer-executable instructions stored in the memory to cause the processor to execute the singing video generation method according to the above first aspect and various possible designs of the first aspect.

In a fourth aspect, according to one or more embodiments of the present disclosure, a computer-readable storage medium is provided, where computer-executable instructions are stored in the computer-readable storage medium, and the computer-executable instructions, when executed by a processor, implement the singing video generation method according to the above first aspect and various possible designs of the first aspect.

In a fifth aspect, according to one or more embodiments of the present disclosure, a computer program product is provided, including a computer program, where the computer program, when executed by a processor, implements the singing video generation method according to the above first aspect and various possible designs of the first aspect.

The above description is only preferred embodiments of the present disclosure and an explanation of the technical principles employed. Those skilled in the art should understand that the scope of disclosure involved in the present disclosure is not limited to the technical solutions formed by the specific combination of the above technical features, and should also cover other technical solutions formed by the arbitrary combination of the above technical features or their equivalent features without departing from the above disclosed concept, for example, the technical solution formed by the mutual replacement of the above features and the technical features with similar functions disclosed in the present disclosure (but not limited to disclosed in the present disclosure).

Furthermore, although the various operations are depicted in a particular order, this should not be understood as requiring the operations to be performed in the particular order shown or in a sequential order. Under certain circumstances, multitasking and parallel processing may be advantageous. Likewise, although several specific implementation details are included in the above discussion, these should not be interpreted as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in language specific to the structural features and/or method logic actions, it should be understood that the subject matter defined in the appended claims is not necessarily limited to the specific features or actions described above. Conversely, the specific features and actions described above are merely exemplary forms of implementing the claims.

## Claims

1. A singing video generation method, **characterized by** comprising:
displaying (S101; S203), after generating target music with a target application, a publishing page corresponding to the target music in the target application, wherein a video generation control for generating a singing video matching the target music is configured in the publishing page;
displaying (S102; S204), in response to a first trigger operation on the video generation control, a first video generation page in the target application, wherein the first video generation page is configured to display at least one video material; and
determining (S103; S206) a target video material and generating (S103; S207) the singing video based on the target video material in response to a second trigger operation on the first video generation page, wherein the singing video and the target video material comprise a same target object, and a mouth action of the target object in the singing video matches music content of the target music.

2. The method of claim 1, wherein a first material area and a second material area are configured in the first video generation page, wherein the first material area is used to display a video generation template, and the second material area is used to display a local image stored in a terminal device; and
determining (S103; S206) the target video material and generating (S103; S207) the singing video based on the target video material in response to the second trigger operation on the first video generation page comprises:
determining a target video generation template and generating the singing video based on the target video generation template in response to the second trigger operation on the first material area; or determining a target local image and generating the singing video based on the target local image in response to the second trigger operation on the second material area.

3. The method of claim 2, wherein displaying (S102) the first video generation page in the target application comprises:
obtaining (S1021), after obtaining user authorization, local images stored in the terminal device;
screening (S1022) a local image to be selected comprising the target object from the local images stored in the terminal device, wherein the target object is an object having facial features; and
displaying (S1023) the local image to be selected in the second material area of the first video generation page.

4. The method of claim 2 or 3, wherein generating (S103) the singing video based on the target local image comprises:
obtaining (S1031) music type information corresponding to the target music;
generating (S1032) a second prompt according to the music type information, wherein the second prompt represents an action feature of the mouth action; and
inputting (S1033) the target music, the target local image, and the second prompt into a video generation model to generate the singing video, wherein the mouth action of the target object in the singing video has the action feature represented by the second prompt.

5. The method of any of claims 1-4, wherein the target music is intelligently generated music, and before generating the target music, the method further comprises:
obtaining (S201) a first prompt input by a user, wherein the first prompt is used to represent a music feature of the target music; and
processing (S202) the first prompt by the target application to generate the target music; and
after displaying (S204), in response to the first trigger operation on the video generation control, the first video generation page in the target application, the method further comprises:
selecting (S205) a corresponding default video material in the first video generation page based on the first prompt.

6. The method of claim 5, wherein after generating (S207) the singing video based on the target video material, the method further comprises:
generating (S210), in response to a modification instruction for the target music, changed target music; and
re-generating the singing video based on the changed target music and the target video material.

7. The method of any of claims 1-6, wherein after determining (S206) the target video material, the method further comprises:
displaying (S208) a second video generation page in the target application, wherein the second video generation page is configured to display a current generation progress of the singing video; and
displaying (S209), after the singing video is generated, a preview video of the singing video in the second video generation page.

8. The method of claim 7, wherein the method further comprises at least one of the following:
switching, in response to a third trigger operation on the second video generation page, the second video generation page to background running; or
canceling the generation of the singing video and returning to the first video generation page or the publishing page in response to a fourth trigger operation on the second video generation page.

9. The method of any of claims 1-8, wherein after determining (S103; S206) the target video material, the method further comprises:
obtaining an image content feature of the target video material; and
displaying, in response to the image content feature not satisfying a preset feature requirement, prompt information.

10. The method of any of claims 1-9, wherein generating (S207) the singing video based on the target video material comprises:
obtaining (S2071) the target music, and dividing the target music into a voice segment and a non-voice segment;
processing (S2072) the target video material and the voice segment using a video generation model to generate a first video segment corresponding to the voice segment, wherein the mouth action of the target object in the first video segment matches the music content of the target music;
generating (S2073) a second video segment corresponding to the non-voice segment based on the target video material, wherein the second video segment is a static video in which a video picture does not change; and
combining (S2074) the first video segment and the second video segment based on a playing timestamp of the first video segment and a playing timestamp of the second video segment to generate the singing video.

11. A singing video generation apparatus (3), **characterized by** comprising:
a first display module (31), configured to display a publishing page after target music is generated, wherein a video generation control for generating a singing video matching the target music is configured in the publishing page;
a second display module (32), configured to display, in response to a first trigger operation on the video generation control, a first video generation page in a target application, wherein the first video generation page is configured to display at least one video material; and
a generation module (33), configured to determine a target video material and generate the singing video based on the target video material in response to a second trigger operation on the first video generation page, wherein the singing video and the target video material comprise a same target object, and a mouth action of the target object in the singing video matches music content of the target music.

12. An electronic device (4), **characterized by** comprising: a processor (41) and a memory (42);
wherein the memory (42) stores computer-executable instructions; and
the processor (41) executes the computer-executable instructions stored in the memory (42) to cause the processor **(41)** to execute the singing video generation method of any of claims 1 to 10.

13. A computer-readable storage medium, **characterized in that** computer-executable instructions are stored in the computer-readable storage medium, and the computer-executable instructions, when executed by a processor, implement the singing video generation method of any of claims 1 to 10.

14. A computer program product, **characterized by** comprising a computer program, wherein the computer program, when executed by a processor, implements the singing video generation method of any of claims 1 to 10.
